# EUROPÄISCHE PATENTANMELDUNG

(11) **EP 1 260 142 A2**
(43) Veröffentlichungstag der Anmeldung: **27.11.2002**
(21) Anmeldenummer: 01113364.2
(22) Anmeldetag: 01.06.2001
(51) Int. Cl.: A22C 11/00, A23L 1/317

(54) **Nahrungsmittelprodukt**

(30) Priorität: 27.04.2001 DE 20107318 U; 04.05.2001 DE 20107581 U
(71) Anmelder: Breuko GmbH, Fleisch- und Wurstwarenvertrieb, 93437 Furth im Wald (DE)
(72) Erfinder: Kott, Herbert, 93458 Eschlkam (DE)
(74) Vertreter: Graf, Helmut, Dipl.-Ing.

(57) **Zusammenfassung**

Ein Nahrungsmittelprodukt, welches unter Verwendung von tierischem oder pflanzlichem Eiweiß hergestellt ist, besitzt eine pralinenartige Form mit einer ebenen oder im wesentlichen ebenen Unterseite und einer konvexen Oberseite. Das Nahrungsmittelprodukt ist vorzugsweise mit einer Vielzahl gleichartiger Produkte jeweils in Aufnahmen einer Verpackung ähnlich Pralinen verpackt.

## Beschreibung

Die Erfindung bezieht sich auf ein Nahrungsmittelprodukt gemäß Oberbegriff Patentanspruch 1.

Aufgabe der Erfindung ist es, ein neuartiges Nahrungsmittelprodukt aufzuzeigen. Zur Lösung dieser Aufgabe ist ein Nahrungsmittelprodukt entsprechend dem Patentanspruch 1 ausgebildet.

Bei dem erfindungsgemäßen, portionierten Nahrungsmittelprodukt sind die einzelnen, aus der eiweißhaltigen Masse geformten Portionen pralinenartig ausgeführt, d. h. sie entsprechen in ihrer Formgebung der Form einer Praline.

Weiterbildungen der Erfindung sind Gegenstand der Unteransprüche. Die Erfindung wird im folgenden anhand der Figuren an einem Ausführungsbeispiel näher erläutert.

Es zeigen:
- Fig. 1 und 2: in vereinfachter Darstellung und in zwei um 90° gedrehten Seitenansicht ein portioniertes Nahrungsmittelprodukt gemäß der Erfindung;
- Fig. 3: in vereinfachter Darstellung und im Schnitt eine Verpackung für das Nahrungsmittelprodukt der Figuren 1 und 2.

Das in den Figuren allgemein mit 1 bezeichnete portionierte Nahrungsmittelprodukt ist in Form einer Praline hergestellt, d. h. mit einer ebenen Unterseite und einer konkaven Oberseite, wobei diese Oberseite auch zwei einander gegenüberliegende Seitenflächen des Produktes 1 bildet, während die beiden anderen einander gegenüberliegenden Seitenflächen oder Stirnseiten 4 des Nahrungsmittelproduktes 1 eben ausgeführt sind. Hergestellt ist das Nahrungsmittelprodukt 1 aus einer tierisches Eiweiß (vorzugsweise Fleisch von warmblütigen Tieren) und/oder pflanzliches Eiweiß enthaltenden Masse, die mit einer geeigneten Technik in die pralinenartige Form geformt ist. Durch eine geeignete Modifizierung und/oder Verfestigung des Eiweißes ist die Formgebung des Nahrungsmittelproduktes stabilisiert. Diese Modifizierung oder Stabilisierung kann in unterschiedlichster Weise erfolgt sein, beispielsweise durch Tieffrieren oder Frosten, durch Wärme- und Hitzebehandeln z. B. durch Koagulieren von Eiweißbestandteilen zumindest an der Außenfläche des Produktes 1 usw. Das Gewicht des Produktes 1 liegt bei diesem Ausführungsbeispiel im Bereich zwischen 3 und 50g.

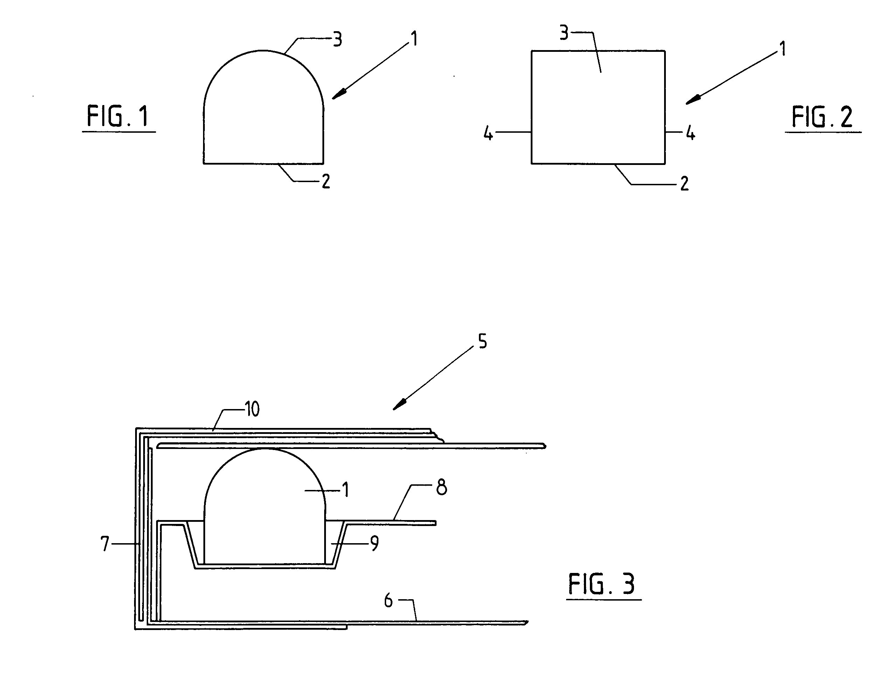

Die Figur 3 zeigt eine mögliche gemeinsame Verpackung 5 für mehrere Produkte 1. Diese Verpackung 5 ist ähnlich einer Pralinenverpackung ausgebildet und besteht bei der dargestellten Ausführungsform aus einem beispielsweise aus Karton gefertigten, schachtelartigen flachen Verpackungskörper 6 mit zugehörigem Deckel 7. In dem Verpackungskörper 6 ist ein aus einer geeigneten Kunststoff-Folie tief gezogener Einsatz 8 angeordnet, in dem näpfchenartige Vertiefungen 9 zur Aufnahme jeweils eines Produktes 1 gebildet sind. Durch eine Einlage 10 sind die einzelnen Portionen oder Produkte 1 in den näpfchenartigen Vertiefungen 9 gesichert. Das Verpacken erfolgt z. B. in einer Schutzgasatmosphäre, wobei die Verpackung 5 rundum mit einer Folie 11 dicht verschlossen wird.

### Bezugszeichenliste

- 1: Portion
- 2: Unterseite
- 3: konvex gewölbte Oberseite
- 4: flache Stirnseite
- 5: Verpackung
- 6: Verpackungsunterteil
- 7: Deckel
- 8: Einsatz
- 9: Vertiefung
- 10: Einlage
- 11: Folie

## Patentansprüche

1. Nahrungsmittelprodukt, hergestellt unter Verwendung von tierischem und/oder pflanzlichem Eiweiß, **gekennzeichnet durch** seine Fertigung als portioniertes Nahrungsmittelprodukt in einer pralinenartigen Form mit einer ebenen oder im wesentlichen ebenen Unterseite (2) und einer konvexen Oberseite (3).

2. Nahrungsmittelprodukt nach Anspruch 1, **dadurch gekennzeichnet, daß** es unter Verwendung von Fleisch hergestellt ist.

3. Nahrungsmittelprodukt nach Anspruch 1 oder 2, **dadurch gekennzeichnet, daß** es unter Verwendung von Soja hergestellt ist.

4. Nahrungsmittelprodukt nach einem der vorhergehenden Ansprüche, **dadurch gekennzeichnet, daß** die die jeweilige Portion bildende Masse zumindest an der Außenfläche der Portion durch Modifizieren in der Form stabilisiert ist.

5. Nahrungsmittelprodukt nach einem der vorhergehenden Ansprüche, **dadurch gekennzeichnet, daß** eine Vielzahl von Portionen (1) jeweils in Aufnahmen (9) in einer Verpackung (5) verpackt sind.

6. Nahrungsmittelprodukt nach Anspruch 5, **dadurch gekennzeichnet, daß** die Aufnahmen von näpfchenartigen Vertiefungen (9) in einem Einsatz (8) einer Verpackungsschachtel (5) gebildet sind.
